# EUROPÄISCHE PATENTSCHRIFT

(11) **EP 0 636 221 B1**
(45) Veröffentlichungstag und Bekanntmachung des Hinweises auf die Patenterteilung: **17.07.1996**
(21) Anmeldenummer: 93907788.9
(22) Anmeldetag: 06.04.1993
(51) Int. Cl.: F16D 66/02, F16D 65/60

(54) **LÜFTSPIELDETEKTOR FÜR EINE DRUCKLUFTBETÄTIGTE SCHEIBENBREMSE**
CLEARANCE DETECTOR FOR A PNEUMATICALLY OPERATED DISC BRAKE
DETECTEUR DE JEU POUR UN FREIN A DISQUE A AIR COMPRIME

(30) Priorität: 13.04.1992 DE 4212407
(43) Veröffentlichungstag der Anmeldung: 01.02.1995
(73) Patentinhaber: KNORR-BREMSE SYSTEME FÜR NUTZFAHRZEUGE GmbH, 80809 München (DE)
(72) Erfinder: BAUMGARTNER, Hans, D-8052 Moosburg (DE)
(74) Vertreter: KUHNEN, WACKER & PARTNER
(86) Internationale Anmeldenummer: DE9300323
(87) Internationale Veröffentlichungsnummer: WO9321458

(56) Entgegenhaltungen:
- EP-A- 0 460 376
- GB-A- 2 202 016

## Beschreibung

Die Erfindung bezieht sich auf einen Lüftspieldetektor, der für eine druckluftbetätigte Scheibenbremse gemäß dem Oberbegriff des Anspruchs 1 vorgesehen ist. Gegenstand der Erfindung ist ferner ein Verfahren zum Erfassen des Lüftspiels einer derartigen Scheibenbremse.

Gattungsgemäße druckluftbetätigte bzw. pneumatische Scheibenbremsen, für die der erfindungsgemäße Lüftspieldetektor vorgesehen ist, sind beispielsweise aus der **DE-OS 37 16 202** sowie aus der **DE-OS 40 32 885** bekannt. Bei diesen bekannten Scheibenbremsen, deren hauptsächlicher Einsatzbereich bei Nutzfahrzeugen liegt, wird eine Bremsscheibe von einem in Axialrichtung verschiebbar gelagerten Bremssattel umfaßt, wobei auf einer Seite des Bremssattels eine druckluftbetätigte Zuspannvorrichtung angeordnet ist, bei deren Betätigung eine auf dieser Seite der Bremsscheibe befindliche Bremsbacke gegen die Bremsscheibe gedrückt wird, worauf sich der Bremssattel aufgrund der Reaktionskräfte in Gegenrichtung verschiebt und dadurch eine auf der gegenüberliegenden Seite befindliche Bremsbacke gleichfalls an die Bremsscheibe andrückt.

Die Zuspannvorrichtung weist bei diesen bekannten Scheibenbremsen als Betätigungsorgan einen Drehhebel auf, der um eine zur Ebene der Bremsscheibe parallel verlaufende Drehachse schwenkbar gelagert ist. Der Drehhebel liegt hierbei auf seiner der Bremsscheibe zugewandten Seite mittels eines Exzenters etwa längsmittig an einer sich parallel zur Drehachse erstreckenden Traverse an, die bezüglich der Bremsscheibe verschiebbar geführt ist und in der mindestens eine ein Außengewinde aufweisende Stellspindel in einem jeweils zugeordneten Innengewinde der Traverse verstellbar verschraubt ist, wobei die Stellspindel über ein an ihrem bremsscheibenseitigen Ende sitzendes Druckstück auf die zuspannseitig im Bremssattel bezüglich der Bremsscheibe verschiebbar gelagerte Bremsbacke einwirkt.

Um das Lüftspiel, d.h. den Abstand der Bremsbacken zur Bremsscheibe im unbetätigten Zustand unter Ausgleich der sich durch Abrieb ändernden Belagstärke konstant zu halten, ist eine Nachstelleinrichtung vorgesehen, die mit jeder Stellspindel drehfest gekoppelt ist und bei jeder Betätigung des Drehhebels jede Stellspindel dann um einen bestimmten Winkel dreht, wenn die Bremsbacke nach Überwindung des Soll-Lüftspiels noch nicht an der Bremsscheibe anliegt. Jede Stellspindel wird folglich von der Nachstelleinrichtung mit zunehmendem Belagverschleiß weiter zur Bremsscheibe hin verschraubt. Zu näheren Einzelheiten des Aufbaus einer derartigen Nachstelleinrichtung wird im übrigen auf die **DE-OS 40 34 165** verwiesen und vollinhaltlich bezug genommen.

Um den Fahrer jederzeit über die restliche Belagstärke in Kenntnis zu setzen, so daß ein ggf. erforderlich werdender Belagwechsel nicht übersehen werden kann, wurde bereits vorgeschlagen, Belagverschleißdetektoren vorzusehen, die mit einer entsprechenden Anzeigeeinrichtung im Fahrerhaus gekoppelt sind. So offenbart die **DE-OS 40 41 318** einen von der Nachstelleinrichtung betätigten Drehwinkelsensor, dessen Ausgangssignal als Verschleißmaß ausgewertet wird. Diese Art der Verschleißerfassung basiert auf der Überlegung, daß die Drehbewegung der Nachstelleinrichtung, die unmittelbar auf die Spindel(n) übertragen wird, proportional zur Nachstellbewegung der Spindel(n) und damit zum Verschleißmaß des von der Zuspanneinrichtung betätigten Bremsbelags ist.

Trotz der genannten Nachstelleinrichtung treten Situationen auf, in denen das Lüftspiel von seinem Sollwert in nennenswertem Maß abweicht. So ist es beispielsweise bei Bergabfahrten häufig der Fall, daß der Fahrer die Bremse über einen längeren Zeitraum hinweg ununterbrochen betätigt; hierdurch tritt u.U. ein so starker Belagverschleiß auf, daß dieser von der Nachstelleinrichtung nicht mehr durch eine einzige Betätigung der Bremse ausgeglichen werden kann. Bei einer längeren Bergabfahrt besteht daher durchaus die Möglichkeit, daß das Lüftspiel schließlich so groß wird, daß die Funktionsbereitschaft der Bremse ernsthaft in Frage gestellt ist. Es ist daher anzustreben, einen Lüftspieldetektor vorzusehen, auf der Basis von dessen Ausgangssignal im Fahrerhaus entweder eine kontinuierliche Anzeige des momentanen Lüftspiels oder zumindest ein Warnsignal bei zu großem Lüftspiel erzeugt wird, so daß der Fahrer durch mehrmaliges Betätigen der Bremse das Lüftspiel wieder auf seinen Sollwert bringen und damit die volle Funktionsbereitschaft der Bremse herbeiführen kann.

Aus der **EP 0 460 378 A2** ist bereits ein derartiger Lüftspieldetektor bekannt. Dieser Lüftspieldetektor ist jedoch für eine S-Nocken-Trommelbremse vorgesehen, bei der die Zuspannkraft unmittelbar, d.h. ohne Zwischenschaltung eines Kraftverstärkungsmechanismus' auf einen Hebel aufgebracht wird, der eine S-Nocken-Welle betätigt; aufgrund dessen scheidet diese Zuspannvorrichtung für den Einsatz bei einer gattungsgemäßen pneumatischen Scheibenbremse aus. Die Nachstelleinrichtung dieser bekannten Trommelbremse ist durch eine drehbar gelagerte Welle gebildet, die einen mit einer Umfangsschnecke versehenen Bereich aufweist, wobei die Umfangs schnecke mit einem Zahnrad in Eingriff steht und bei Auftreten von Belagverschleiß um einen bestimmten Betrag gedreht wird; hierdurch wird die Welle in Nachstellrichtung in der Weise verschoben, daß sich der Drehpunkt des Bremshebels um ein entsprechendes Stück verlagert, wobei diese Strecke von einem Wegsensor erfaßt und als Maß für den Belagverschleiß angezeigt wird. Das Funktionsprinzip sowie insbesondere die Nachstelleinrichtung dieser bekannten Trommelbremse weisen demnach grundsätzliche Unterschiede zu den gattungsgemäßen druckluftbetätigten Scheibenbremsen auf.

Der Lüftspieldetektor der aus der **EP 0 460 378 A2** bekannten S-Nocken-Trommelbremse besteht aus einem Sensor, der den von dem Betätigungshebel der Bremse zurückgelegten Weg erfaßt, welcher unmittelbar proportional zum Lüftspiel ist. Obgleich der Betätigungshebel der gattungsgemäßen druckluftbetätigten Scheibenbremsen auf einen Kraftübersetzungsmechanismus einwirkt, könnte grundsätzlich in Erwägung gezogen werden, einen ähnlichen Detektor zur Erfassung des Lüftspiels vorzusehen. Ein derartiger Detektor erhöht jedoch die Herstellungskosten der Bremse nicht unerheblich, wobei zu beachten ist, daß ebenfalls eine entsprechende Zuleitung zum Fahrerhaus bzw. einer Auswertungselektronik vorgesehen werden muß, wodurch die Störanfälligkeit erhöht wird.

In der **EP-0 460 376 A2** ist eine Betätigungseinrichtung für eine Trommelbremse offenbart, bei der die Nachstelleinrichtung aus einem Getriebe in Form eines Schneckenrads und einer Schnecke besteht, mittels derer die Relativlage einer Bremsbetätigungswelle zu einem Bremshebel in Abhängigkeit vom Belagverschleiß verstellt wird. Das jeweilige Verstellmaß dieser Nachstelleinrichtung wird über ein längsverschiebbares Stellglied abgegriffen, dessen jeweilige Lage von einem Wegsensor abgetastet wird, so daß ein dem momentanen Belagverschleiß entsprechendes Ausgangssignal erhalten wird. Die in dieser Druckschrift gezeigte Betätigungseinrichtung ist jedoch weder für eine Scheibenbremse vorgesehen, noch handelt es sich bei der Nachstelleinrichtung um eine Stellspindel, noch wird deren Nachstellbewegung mittels eines Drehwinkelsensors erfaßt, wie dies im Oberbegriff des Anspruchs 1 vorausgesetzt wird.

Der Erfindung liegt die Aufgabe zugrunde, einen für eine druckluftbetätigte Scheibenbremse gemäß dem Oberbegriff des Anspruchs 1 vorgesehenen Lüftspieldetektor zu schaffen, der sich durch geringe Herstellungskosten auszeichnet und eine geringe Störanfälligkeit aufweist.

Diese Aufgabe wird erfindungsgemäß mit den im Kennzeichnungsteil des Anspruchs 1 angegebenen Maßnahmen gelöst.

Untersuchungen haben gezeigt, daß das Ausgangssignals des aus der **DE-OS 40 41 318** bekannten Belagverschleißdetektors den in Fig.4 gezeigten prinzipiellen Verlauf aufweist. Aus diesem Kurvenverlauf ist entnehmbar, daß der von der Nachstelleinrichtung bei jedem Nachstellvorgang herbeigeführte Verstellweg umso kleiner ist, je geringer der Abstand zum Soll-Lüftspiel ist, d.h. je weniger Abrieb seit der letzten Betätigung der Bremse aufgetreten ist.

Die Erfindung macht sich diese Eigenschaft des Ausgangssignals des Belagverschleißdetektors zunutze und schlägt vor, eine Auswertungseinrichtung vorzusehen, welche den jeweiligen Wert dieses Ausgangssignals erfaßt, bei jeder Veränderung des Ausgangssignals die sich ergebende Signaldifferenz zum vorherigen Signalwert ermittelt und aus dieser Signaldifferenz das momentane Lüftspiel bestimmt. Wie aus Fig.4 hervorgeht, kann beispielsweise bei einer mit D1 bezeichneten Signaldifferenz darauf geschlossen werden, daß das Lüftspiel seinen Sollwert erreicht hat, während bei einer mit D3 bezeichneten Signaldifferenz das Lüftspiel ca. 3 mm beträgt und demnach mehr als drei mal so groß wie der Sollwert von 0,8 mm ist.

Eine derartige Auswertungseinrichtung kann mit vergleichsweise preisgünstigen elektronischen Bauelementen oder aber gemäß Anspruch 7 mittels eines ebenso preisgünstigen und ohnehin meist bereits vorhandenen Mikroprozessors realisiert werden, so daß die Mehrkosten kaum ins Gewicht fallen; darüber hinaus entfällt eine zusätzliche Meßleitung zur Scheibenbremse, so daß auch die Störanfälligkeit entsprechend verringert ist.

Gemäß Anspruch 2 kann die Umsetzung der Signaldifferenz in das anzuzeigende Lüftspiel z.B. dadurch erfolgen, daß die Auswertungseinrichtung die ermittelte Signaldifferenz mit den in einer Tabelle gespeicherten Werten vergleicht, in der für jede ermittelte Signaldifferenz ein korrespondierender Wert des Lüftspiels gespeichert ist, und den korrespondierenden Wert als Ausgangssignal abgibt. Eine derartige Tabelle läßt sich sehr leicht mittels eines Festwertspeichers (ROM) oder dergleichen realisieren.

Darüber hinaus ist es möglich, mittels der Auswertungseinrichtung die ermittelte Signaldifferenz mit einem vorbestimmten Grenzwert zu vergleichen und bei Überschreiten dieses Grenzwerts ein Warnsignal zu erzeugen, das ein zu großes Lüftspiel anzeigt. Beispielsweise könnte die in Fig.4 mit D2 bezeichnete Signaldifferenz als Schwelle zur Auslösung der Warnung eingestuft werden. Ggf. kann es ausreichend sein, auf eine kontinuierliche Anzeige zu verzichten und lediglich eine solche Warnanzeige vorzusehen, die beispielsweise durch ein Blinklicht oder einen Warnton darauf hinweist, daß das Bremspedal zwecks Nachstellung der Beläge zu betätigen ist.

Die Auswertungseinrichtung kann gemäß Anspruch 4 so aufgebaut sein, daß sie den Wert des Ausgangssignals des Drehwinkelsensors kontinuierlich erfaßt, so daß jede Signalveränderung sofort erfaßt werden kann. Darüber hinaus ist es gemäß Anspruch 5 auch möglich, den Wert des Ausgangssignals lediglich bei Beginn jeder Betätigung der Bremse und im Anschluß hieran zu erfaßen, da in den dazwischenliegenden Zeiten keine Signalveränderung auftreten kann. Jedoch muß in diesem Fall zusätzlich ein Bremspedal-Betätigungssignal bei der Auswertung herangezogen werden. Alternativ hierzu ist es gemäß Anspruch 6 ferner möglich, das Ausgangssignal des Drehwinkelsensors in zyklischer Folge abzutasten, wobei hierbei der Zeitabstand der Abtastvorgänge kleiner zu wählen ist als die minimale Dauer eines Zuspannvorgangs, so daß jede Signaländerung sicher erfaßt werden kann. Diese Art der Signalüberwachung bietet sich besonders bei Verwendung eines Mikroprozessors an, da hierbei eine in dem genannten Zeitabstand aufgerufene Interrupt-Routine zur Berechnung des Lüftspiels herangezogen werden kann, so daß die Rechenkapazität nur in geringem Maße beansprucht wird.

Wenn für die Lüftspielerfassung, wie in der eingangs genannten **DE-OS 40 41 318** vorgeschlagen, ein von der Nachstelleinrichtung betätigter Drehwinkelsensor verwendet wird, so hat dies zur Folge, daß dessen Ausgangssignal nach jeder vollen Umdrehung einen Signalsprung aufweist, der von der erfindungsgemäßen Auswertungseinrichtung zusätzlich berücksichtigt werden muß, um keine fehlerhafte Anzeige hervorzurufen. Es empfiehlt sich daher, gemäß Anspruch 8 das bremsscheibenabgewandte Ende der Nachstelleinrichtung mit einem Untersetzungsgetriebe zu koppeln, das die von der Nachstelleinrichtung während des gesamten Nachstellzyklus' insgesamt durchgeführten Umdrehungen auf höchstens eine Umdrehung reduziert, und über den Abtrieb des Getriebes den Drehwinkelsensor zu betätigen. Hierdurch wird erreicht, daß das Ausgangssignal des Drehwinkelsensors keine unerwünschten Signalsprünge aufweist und somit unmittelbar ausgewertet werden kann. Gemäß Anspruch 9 ist es in diesem Fall besonders vorteilhaft, für den Drehwinkelsensor ein Drehpotentiometer zu verwenden, wobei der Abtrieb des Untersetzungsgetriebes gemäß Anspruch 10 vorzugsweise mit einem Schleifer des Drehpotentiometers gekoppelt wird.

Die Erfindung wird nachstehend anhand der Beschreibung von Ausführungsbeispielen unter Bezugnahme auf die Zeichnung näher erläutert. Es zeigen:
**Fig. 1** anhand eines Querschnitts den schematischen Aufbau der Zuspannvorrichtung einer druckluftbetätigten Scheibenbremse;
**Fig. 2** einen Längsschnitt der in Fig. 1 gezeigten Zuspannvorrichtung;
**Fig. 3** ein vergrößertes Detail der Fig.2 zur Erläuterung des grundsätzlichen Aufbaus und der Funktionsweise des Belagverschleißdetektors; und
**Fig. 4** den Verlauf eines Ausgangssignals eines von einem Zykloiden-Untersetzungsgetriebe betätigten Drehpotentiometers.

Um die der Erfindung zugrundeliegende Problematik zu verdeutlichen, sollen zunächst der prinzipielle Aufbau und die Wirkungsweise der gattungsgemäßen Scheibenbremse und deren Zuspannvorrichtung näher erläutert werden. Obgleich die gezeigte Ausführungsform der Zuspannvorrichtung zwei Spindeln aufweist, sei darauf hingewiesen, daß die Erfindung selbstverständlich auch bei einer einspindeligen Zuspannvorrichtung anwendbar ist.

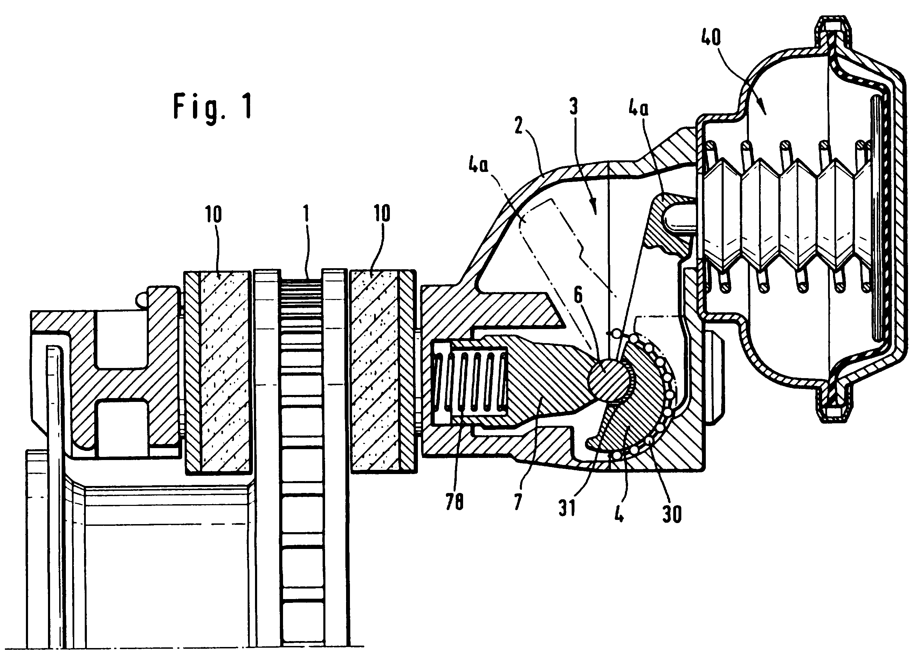

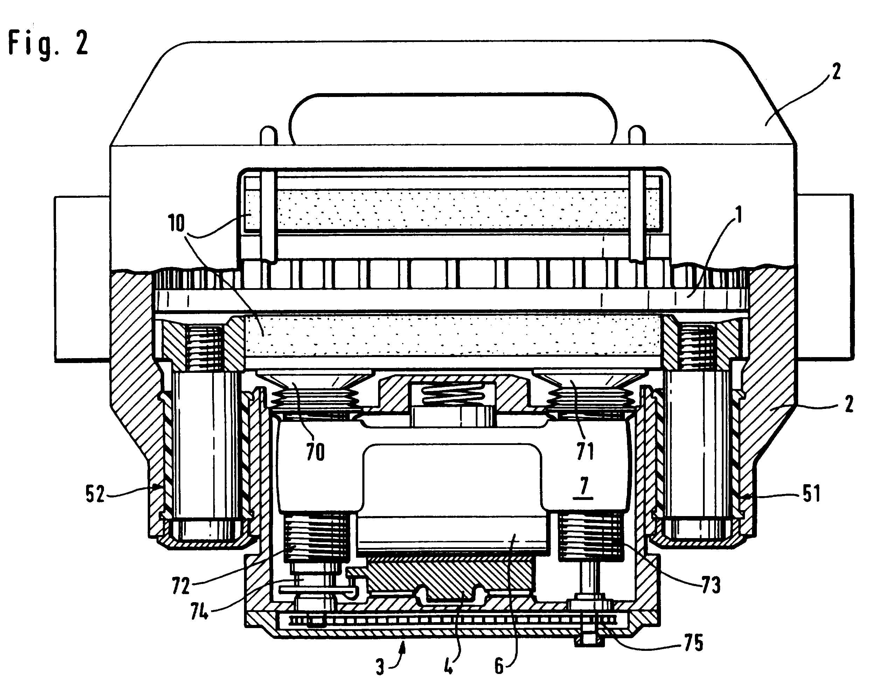

Wie aus den Figuren 1 und 2 zu erkennen ist, wird eine (innenbelüftete) Bremsscheibe 1, die an einer nicht näher bezeichneten Achse eines Nutzfahrzeugs befestigt ist, von einem Bremssattel 2 umfaßt, welcher gemäß Fig. 2 mittels eines starren Führungslagers 52 sowie mittels eines Ausgleichs lagers 51 in axialer Verschiebbarkeit bezüglich der Bremsscheibe 1 am Fahrzeug gelagert ist. Im übrigen sind Aufbau und Funktion des Bremssattels bekannt, so daß sich eine nähere Erläuterung erübrigt.

Auf der in Fig. 1 rechten bzw. der in Fig. 2 unteren Seite der Bremsscheibe 1 ist eine schematisch mit dem Bezugszeichen 3 bezeichnete (zweispindelige) Zuspannvorrichtung angeordnet. Im Bremssattel 2 ist ein im wesentlichen halbkreisförmiges Drehlager 30 vorgesehen, dessen Drehachse parallel zur Ebene der Bremsscheibe 1 verläuft und das den entsprechend abgerundeten Bereich eines Drehhebels 4 aufnimmt, so daß der Drehhebel 4 parallel zur Ebene der Bremsscheibe 1 verschwenkt werden kann. Zur Betätigung des Drehhebels 4 ist ein lediglich schematisch dargestellter Bremszylinder 40 vorgesehen, der mit einem Kolben in eine geeignet geformte Ausnehmung eines Betätigungsarms 4a des Drehhebels 4 eingreift. Wenn der Bremszylinder 40 mit der Druckluft beaufschlagt wird, wird der Betätigungsarm 4a des Drehhebels 4 folglich von seiner Ruheposition in die in Fig. 1 in gestrichelter Darstellung angedeutete Position bewegt.

Die dem halbschalenförmigen Drehlager 30 abgewandte Seite des Drehhebels 4 ist über einen als Nocken dienenden Exzenter 6 mit einer Traverse 7 gekoppelt, die sich innerhalb des Bremssattels 2 im wesentlichen parallel zur Drehachse der Bremsscheibe 1 erstreckt und in dieser Ebene verschiebbar gelagert ist. An ihrem der Bremsscheibe 1 zugewandten Ende weist die Traverse 7 eine sacklochartige Ausnehmung auf, die von einem in Richtung zur Bremsscheibe 1 auskragenden, rohrartigen Ansatz umgeben ist. Dieser Ansatz der Traverse 7 ist in einer entsprechenden Ausnehmung des Bremssattels 2 rechtwinklig zur Ebene der Bremsscheibe 1 unter Beibehaltung eines derartigen Spiels schiebegelagert, daß die Traverse 7 geringfügige Schwenkbewegungen in der Zeichnungsebene ausführen kann. Innerhalb der Ausnehmung ist eine Spiralfeder 78 angeordnet, die zwischen die Traverse 7 und das der Bremsscheibe 1 zugewandte Ende des Bremssattels 2 eingespannt ist und dadurch die Traverse 7 zum Drehhebel 4 hin vorspannt.

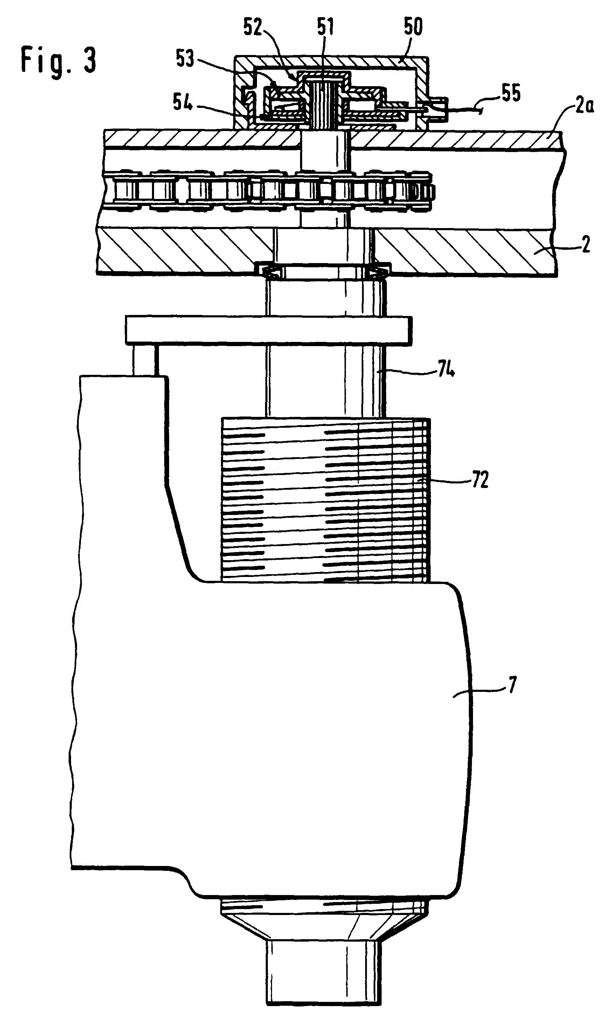

Wie insbesondere dem Längsschnitt der Fig. 2 entnehmbar ist, weist die Traverse 7 an beiden Seiten jeweils eine mit einem Innengewinde versehene Bohrung auf, in der jeweils eine Stellspindel 72 bzw. 73 justierbar verschraubt ist, deren in Fig.3 mit 711 bezeichnetes Außengewinde in einem entsprechend geformten Innengewinde der Traverse 7 geführt ist. An dem der Bremsscheibe 1 zugewandten Ende jeder der Stellspindeln 72 und 73 ist ein sich kegelförmig verbreiterndes Druckstück 70 bzw. 71 befestigt. Da sich die beiden Stellspindeln 72 und 73 infolge ihrer Anordnung in der Traverse 7 senkrecht zur Ebene der Bremsscheibe 1 erstrecken, liegen die Druckstücke 70 und 71 mit ihren flachen Enden an einer Bremsbacke 10 an.

Im Inneren der Stellspindel 72 ist eine Nachstelleinrichtung 74 angeordnet, die über eine Axialverzahnung drehfest mit der Stellspindel 72 gekoppelt ist, so daß die axiale Verschiebbarkeit der Stellspindel 72 gewährleistet ist. Die Nachstelleinrichtung 74 wird bei jeder Betätigung des Drehhebels 4 um einen bestimmten Winkelbetrag gedreht, wodurch ein kontinuierliches Nachstellen der Bremse gewährleistet ist. In eine entsprechende Axialverzahnung der gegenüberliegenden Stellspindel 73 greift ein Zahnrad ein, das über eine Welle mit einer Synchronisationseinrichtung 75 gekoppelt ist, die das innenliegende Zahnrad und damit die Spindel 73 synchron mit der Nachstelleinrichtung 74 dreht. Hierdurch wird erreicht, daß das Druckstück 71 synchron mit dem Druckstück 70 nachgestellt wird.

Bei einer einspindeligen Ausführungsform der Traverse 7, die demzufolge lediglich eine einzige Stellspindel und damit nur ein Druckstück aufweist, wird die Stellspindel beispielsweise in der Mitte der Traverse 7 angeordnet, während der Exzenter 6 sowie die die Druckfeder aufweisende Lagerung der Traverse 7 jeweils in zweifacher Ausfertigung auf beiden Seiten der zentralen Stellspindel vorgesehen sind.

Nachfolgend wird das Arbeitsprinzip der Zuspanneinrichtung kurz erläutert. Bei Druckluftbeaufschlagung des Bremszylinders 40 wird der Betätigungsarm 4a gemäß Fig. 1 nach links verschwenkt, wodurch der am Drehhebel 4 wirkende Exzenter 6 um eine entsprechend den Hebelgesetzen verringerte Strecke gleichfalls nach links verschoben wird. Die Traverse 7 wird daher entgegen der Vorspannkraft der Spiralfeder 78 um diese Wegstrecke zur Bremsscheibe 1 hin gedrückt. Die an der Traverse 7 über die Stellspindeln 72 und 73 befestigten Druckstücke 70 bzw. 71 drücken folglich unter Überwindung des Lüftspiels (dessen Sollwert in der Praxis ca. 0,4 mm beträgt) die Bremsbacke 10 gegen die Bremsscheibe 1. Wenn der Betätigungsarm 4a weiter nach links verschwenkt wird, verschiebt sich der Bremssattel aufgrund der auf die Bremsscheibe 1 ausgeübten Kraft in Fig. 1 nach rechts, so daß schließlich auch die linke Bremsbacke 10 gegen die Bremsscheibe 1 gepreßt wird. Der Sollwert des Gesamt-Lüftspiels beträgt daher ca. 0,8 mm.

Wenn die beiden Bremsbacken 10 im Verlauf des vorstehend erläuterten Zuspannvorgangs um eine vorbestimmte, dem Soll-Lüftspiel entsprechende Strecke verschoben worden sind, wird die Nachstelleinrichtung 74 vom Drehhebel 4 betätigt. Sofern das Lüftspiel korrekt eingestellt ist, liegen beide Bremsbacken 10 zu diesem Zeitpunkt an der Bremsscheibe 1 an. Infolgedessen spricht eine in der Nachstelleinrichtung 74 vorgesehene Rutschkupplung an, so daß die Stellspindel 72 und die mit ihr synchronisierte Stellspindel 73 nicht verstellt werden. Wenn demgegenüber ein zu großes Lüftspiel vorliegt, was beispielsweise nach einem Belagwechsel oder bei zunehmendem Verschleiß der Bremsbacken der Fall ist, werden die Stellspindeln 72 und 73 von der Nachstelleinrichtung 74 um eine bestimmte Strecke gedreht und bringen dadurch das Lüftspiel, gegebenenfalls nach mehrmaliger Betätigung der Bremse, auf den Sollwern. Auf diese Weise ist gewährleistet, daß die erfindungsgemäße Scheibenbremse bis zum vollständigen Abrieb der Bremsbacken 10 funktionsfähig bleibt.

Der augenblickliche Betrag des Belagverschleißes wird mittels eines Belagverschleißdetektors erfaßt, dessen genauer Aufbau in Fig.3 gezeigt ist. Demzufolge greift das bremsscheibenabgewandte Ende der Nachstelleinrichtung 74 mittels eines Ritzels 51 in eine entsprechende axiale Innenverzahnung eines Untersetzungsgetriebes 53 derart ein, daß dieses bei jeder Drehbewegung der Nachstelleinrichtung 74 angetrieben wird. Mit dem Abtrieb des Untersetzungsgetriebes 53 ist ein Drehwinkelsensor in Form eines Drehpotentiometers 54 in der Weise gekoppelt, daß ein Schleifer des Drehpotentiometers 54 um einen um den Untersetzungsfaktor des Getriebes 53 verringerten Drehwinkel gedreht wird. Die Kopplung von Untersetzungsgetriebe 53 und Drehpotentiometer 54 ist dabei so justiert, daß der Schleifer in der obersten Stellung der Drehspindel 74 ("volle Belagstärke") die eine Endposition einer Widerstandsbahn berührt, so daß das Drehpotentiometer 54 beispielsweise den niedrigsten Widerstandswert aufweist; andererseits ist das Untersetzungsverhältnis des Getriebes 53 so gewählt, daß der Schleifer in der untersten Stellung der Drehspindel 74 ("Bremsbelag vollständig aufgebraucht") die andere Endposition der Widerstandsbahn berührt, so daß das Drehpotentiometer 54 seinen höchsten Widerstandswert aufweist. Jedoch ist es selbstverständlich auch möglich, das Verhältnis der Widerstandswerte umgekehrt zu wählen.

Das als Zykloidengetriebe ausgebildete Untersetzungsgetriebe 53 ist in einer Lagerungsvorrichtung 52 gelagert, die das Untersetzungsgetriebe 53 zwar drehfest, jedoch unter Aufrechterhaltung einer Längs- und Querverschiebbarkeit trägt und an einer Gehäuseabdeckung 50 befestigt ist, die gleichzeitig zum Schutz des Belagverschleißdetektors dient.

Das Drehpotentiometer 54 wird über eine Leitung 55 mit einer nicht näher gezeigten Auswertungseinrichtung verbunden, die aus dem momentanen Widerstandswert eine Information über den jeweiligen Wert der Bremsbelagstärke ableitet und ggf. über ein entsprechendes Instrument im Führerhaus anzeigt.

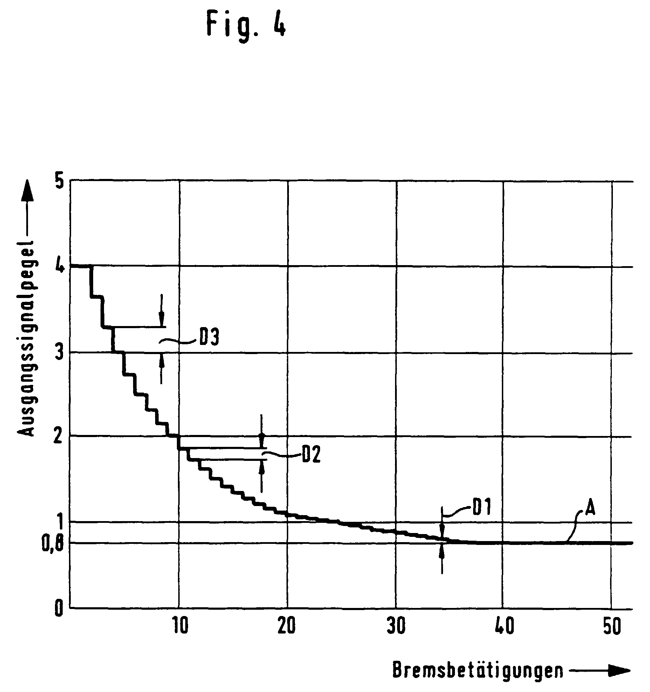

Erfindungsgemäß ist die Auswertungseinrichtung darüber hinaus in der Lage, den momentanen Wert des Lüftspiels zu erfassen. Fig.4 zeigt den Verlauf eines Ausgangssignals A des Drehpotentiometer 54 (bei dem es sich folglich um einen Widerstandswert oder, bei Anlegen einer Referenzspannung, um einen Spannungswert handelt), aus dem zu erkennen ist, daß der von der Nachstelleinrichtung 74 bei jedem Nachstellvorgang herbeigeführte Verstellweg umso kleiner ist, je geringer der Abstand zum Soll-Lüftspiel ist, d.h. je weniger Abrieb seit der letzten Betätigung der Bremse aufgetreten ist. Im Normalfall, d.h. wenn der Fahrer die Bremse nicht zu lange betätigt und ein dementsprechend geringer Abrieb auftritt, ist die Nachstelleinrichtung 74 ohne weiteres in der Lage, das Soll-Lüftspiel mittels einer einzigen Nachstellbewegung einzustellen, wobei hier eine Signaldifferenz auftritt, die in Fig.4 mit D1 bezeichnet ist.

Wenn die Bremse demgegenüber zu lange betätigt wurde ist die Nachstelleinrichtung 74 nicht in der Lage, das Soll-Lüftspiel mittels einer einzigen Nachstellbewegung einzustellen; wenn die Differenz zum Soll-Lüftspiel beispielsweise ca. 1 mm beträgt, so werden, wie aus Fiq.4 hervorgeht, etwa 25 Betätigungen der Bremse benötigt, bis das Soll-Lüftspiel korrekt eingestellt ist. Da sich die bei der genannten Differenz von 1 mm auftretende Signaldifferenz D2 von den anderen Signaldifferenzen unterscheidet, ist es möglich, die Signaldifferenz in ein Signal umzusetzen, welches den momentanen Wert des Lüftspiels angibt.

Diese Umsetzung der Signaldifferenz in das anzuzeigende Lüftspiel kann z.B. dadurch erfolgen, daß die Auswertungseinrichtung die ermittelte Signaldifferenz mit den in einer Tabelle gespeicherten Werten vergleicht, in der für jede ermittelte Signaldifferenz ein korrespondierender, beispielsweise empirisch in Abhängigkeit vom jeweiligen Bremsentyp ermittelter Wert des Lüftspiels gespeichert ist.

Dieser korrespondierende Wert wird dann als Ausgangssignal abgegeben. Eine derartige Tabelle läßt sich sehr leicht mittels eines Festwertspeichers (ROM) oder dergleichen realisieren.

Alternativ oder zusätzlich hierzu wird die ermittelte Signaldifferenz mit einem vorbestimmten Grenzwert verglichen, bei dessen Überschreiten ein Warnsignal erzeugt wird, das ein zu großes Lüftspiel anzeigt. Beispielsweise könnte die in Fig.4 mit D2 bezeichnete Signaldifferenz als Schwelle zur Auslösung der Warnung eingestuft werden. In vielen Betriebsfällen kann es ausreichend sein, auf eine kontinuierliche Anzeige zu verzichten und lediglich eine Warnanzeige vorzusehen, die beispielsweise durch ein Blinklicht oder einen Warnton darauf hinweist, daß das Bremspedal zwecks Nachstellung der Bremsbeläge betätigt werden sollte.

Obgleich die Überwachung des Ausgangssignals des Drehpotentiometers 54 kontinuierlich bzw. ohne Unterbrechung erfolgen kann, ist es selbstverständlich auch möglich, den Wert des Ausgangssignals lediglich bei Beginn jeder Betätigung der Bremse und im Anschluß hieran zu erfaßen, da in den dazwischenliegenden Zeiten keine Signalveränderung auftreten kann. In diesem Fall wird zusätzlich ein Bremspedal-Betätigungssignal zur Signalauswertung herangezogen.

Die Auswertungseinrichtung wird vorzugsweise mittels eines Mikroprozessors realisiert, da ein solcher in den meisten Fahrzeugen ohnehin bereits vorhanden ist oder, falls dies nicht der Fall ist, zumindest einen relativ preiswerten Aufbau ermöglicht. Hier empfiehlt es sich, das Ausgangssignal des Drehpotentiometers 54 in zyklischer Folge abzutasten, wobei der Zeitabstand der Abtastvorgänge kleiner gewählt werden muß als die minimale Dauer eines Zuspannvorgangs, so daß jede Signaländerung sicher erfaßt werden kann. Zu diesem Zweck wird in dem genannten Zeitabstand eine geeignete Interrupt-Routine aufgerufen, die jedesmal den momentanen Wert des Lüftspiels berechnet und diesen Wert anzeigt bzw. bei Überschreiten eines Grenzwerts Alarm auslöst.

Bei der erläuterten Ausführungsform der Zuspannvorrichtung 3 erfolgt die Kraftübersetzung mittels eines drehbar gelagerten Hebels 4, der über einen Exzenter auf eine Traverse 7 einwirkt; das Prinzip der Erfindung ist jedoch selbstverständlich auch bei anderen Zuspannvorrichtungen verwendbar, etwa bei solchen, bei denen die Kraftübersetzung mittels eines Spreizkeils oder einer Kugelrampe erfolgt. Ebenso ist die Erfindung nicht auf die gezeigten Ausführungsformen von Stellspindel und Nachstelleinrichtung beschränkt; die erfindungsgemäße Auswertungseinrichtung kann vielmehr bei allen Stellelementen verwendet werden, deren axiale Relativlage zur Bremsscheibe mit zunehmendem Belagverschleiß von einer geeigneten Antriebseinrichtung verändert wird.

## Patentansprüche

1. Lüftspieldetektor für eine druckluftbetätigte Scheibenbremse, die einen eine Bremsscheibe *(1)* umfassenden Bremssattel *(2)* aufweist, auf dessen einer Seite eine Zuspannvorrichtung *(3)* angeordnet ist, die über mindestens eine Stellspindel *(72, 73)* und ein an derem bremsscheibenseitigen Ende sitzendes Druckstück *(70, 71)* auf eine zuspannseitig im Bremssattel *(2)* bezüglich der Bremsscheibe *(1)* verschiebbar gelagerte Bremsbacke *(10)* einwirkt, wobei eine mit der Stellspindel *(72, 73)* drehfest gekoppelte Nachstelleinrichtung *(74)* das sich infolge Belagverschleiß ändernde Lüftspiel im wesentlichen konstant hält und mit einem Drehwinkelsensor *(54)* gekoppelt ist, dessen Ausgangssignal dem momentanen Belagverschleiß entspricht,
*gekennzeichnet durch*
eine Auswertungseinrichtung, die den Wert des Ausgangssignals *(A)* des Drehwinkelsensors *(54)* erfaßt, bei jeder Veränderung des Ausgangssignals *(A)* die Signaldifferenz *(D1, D2, D3)* zum vorherigen Signalwert ermittelt, die ermittelte Signaldifferenz *(D1, D2, D3)* mit empirisch ermittelten Signaldifferenzwerten des Ausgangssignals *(A)* des Drehwinkelsensors (54) vergleicht und aus dem Vergleichsergebnis das momentane Lüftspiel bestimmt.

2. Lüftspieldetektor nach Anspruch 1, *dadurch gekennzeichnet,* daß die Auswertungseinrichtung die ermittelte Signaldifferenz *(D1, D2, D3)* mit in einer Tabelle gespeicherten Werten vergleicht, in der für jede ermittelte Signaldifferenz *(D1, D2, D3)* ein korrespondierender Wert des Lüftspiels gespeichert ist, und den korrespondierenden Wert als Ausgangssignal abgibt.

3. Lüftspieldetektor nach Anspruch 1 oder 2, *dadurch gekennzeichnet,* daß die Auswertungseinrichtung die ermittelte Signaldifferenz *(D1, D2, D3)* mit einem vorbestimmten Grenzwert vergleicht und bei Überschreiten dieses Grenzwerts ein Warnsignal erzeugt, das ein zu großes Lüftspiel anzeigt.

4. Lüftspieldetektor nach einem der Ansprüche 1 bis 3, *dadurch gekennzeichnet,* daß die Auswertungseinrichtung den Wert des Ausgangssignals *(A)* des Drehwinkelsensors *(54)* kontinuierlich erfaßt.

5. Lüftspieldetektor nach einem der Ansprüche 1 bis 3, *dadurch gekennzeichnet,* daß die Auswertungseinrichtung den Wert des Ausgangssignals *(A)* des Drehwinkelsensors *(54)* bei Beginn jeder Betätigung der Bremse und im Anschluß hieran erfaßt.

6. Lüftspieldetektor nach einem der Ansprüche 1 bis 3, *dadurch gekennzeichnet,* daß die Auswertungseinrichtung das Ausgangssignal *(A)* des Drehwinkelsensors *(54)* in zyklischer Folge abtastet, wobei der Zeitabstand der Abtastvorgänge kleiner gewählt ist als die minimale Dauer eines Zuspannvorgangs.

7. Lüftspieldetektor nach einem der Ansprüche 1 bis 6, *dadurch gekennzeichnet,* daß die Auswertungseinrichtung eine Recheneinrichtung, vorzugsweise einen Mikroprozessor aufweist.

8. Lüftspieldetektor nach einem der Ansprüche 1 bis 7, *dadurch gekennzeichnet,* daß das bremsscheibenabgewandte Ende der Nachstelleinrichtung *(74)* mit einem Untersetzungsgetriebe *(53)* gekoppelt ist, das die von der Nachstelleinrichtung *(74)* während des gesamten Nachstellzyklus' insgesamt durchgeführten Umdrehungen auf höchstens eine Umdrehung reduziert und dessen Abtrieb den Drehwinkelsensor *(54)* betätigt.

9. Lüftspieldetektor nach Anspruch 8, *dadurch gekennzeichnet,* daß der Drehwinkelsensor ein Drehpotentiometer *(54)* aufweist, wobei der Untersetzungsfaktor des Untersetzungsgetriebes *(53)* so gewählt ist, daß die von der Nachstelleinrichtung *(74)* während des gesamten Nachstellzyklus' insgesamt durchgeführten Umdrehungen auf einen Drehwinkel reduziert sind, der im wesentlichen dem vollständigen Betätigungswinkel des Drehpotentiometers *(54)* entspricht.

10. Lüftspieldetektor nach Anspruch 9, *dadurch gekennzeichnet,* daß der Abtrieb des Untersetzungsgetriebes *(53)* mit einem Schleifer *(542)* des Drehpotentiometers *(54)* gekoppelt ist.

11. Verfahren zum Erfassen des Lüftspiels einer Scheibenbremse gemäß dem Oberbegriff des Anspruchs 1, *dadurch gekennzeichnet,* daß der Wert eines den Bremsbelagverschleiß anzeigenden Ausgangssignals *(A)* erfaßt, bei jeder Veränderung des Ausgangssignals *(A)* die Signaldifferenz *(D1, D2, D3)* zum vorherigen Signalwert ermittelt, die ermittelte Signaldifferenz *(D1, D2, D3)* mit empirisch ermittelten Signaldifferenzwerten des Ausgangssignals *(A)* des Drehwinkelsensors *(54)* verglichen und aus dem Vergleichsergebnis das momentane Lüftspiel bestimmt wird.

12. Verfahren nach Anspruch 11, *dadurch gekennzeichnet,* daß die ermittelte Signaldifferenz *(D1, D2, D3)* mit in einer Tabelle gespeicherten Werten verglichen wird, in der für jede ermittelte Signaldifferenz *(D1, D2, D3)* ein korrespondierender Wert des Lüftspiels gespeichert ist, und daß der korrespondierende Wert als Ausgangssignal abgegeben wird.

13. Verfahren nach Anspruch 11 oder 12, *dadurch gekennzeichnet,* daß die ermittelte Signaldifferenz *(D1, D2, D3)* mit einem vorbestimmten Grenzwert verglichen und bei Überschreiten dieses Grenzwerts ein Warnsignal erzeugt wird, das ein zu großes Lüftspiel anzeigt.

14. Verfahren nach einem der Ansprüche 11 bis 13, *dadurch gekennzeichnet,* daß der Wert des Ausgangssignals *(A)* kontinuierlich erfaßt wird.

15. Verfahren nach einem der Ansprüche 11 bis 13, *dadurch gekennzeichnet,* daß der Wert des Ausgangssignals *(A)* bei Beginn jeder Betätigung der Bremse und im Anschluß hieran erfaßt wird.

16. Verfahren nach einem der Ansprüche 11 bis 13, *dadurch gekennzeichnet,* daß das Ausgangssignal *(A)* in zyklischer Folge abgetastet wird, wobei der Zeitabstand der Abtastvorgänge kleiner gewählt wird als die minimale Dauer eines Zuspannvorgangs.

## Claims

1. A clearance detector for a compressed-air actuated disk brake comprising a caliper *(2)* which reaches around a brake disk *(1)* and on one side of which an application device *(3)* is arranged which, by way of at least one actuating spindle *(72, 73)* and a pressure member *(70, 71)* mounted on the end thereof facing said brake disk, acts on a brake pad *(10)* which, on the application side, is disposed in said caliper *(2)* to be displaceable with respect to said brake disk *(1)*, an adjusting means *(74)* coupled in a rotationally fixed manner to said actuating spindle *(72, 73)* maintaining the clearance varying due to lining wear essentially constant and being coupled to an angle of rotation sensor *(54),* the output signal of which corresponds to the current lining wear,
*characterised by*
an evaluation means which detects the value of output signal *(A)* of said angle of rotation sensor *(54)*, determines the signal difference *(D1, D2, D3)* with the value of the preceding signal at every change of said output signal *(A),* compares the determined signal difference *(D1, D2, D3)* with empirically determined signal difference values of said output signal *(A)* of said angle of rotation sensor *(54)*, and determines the current clearance from the result of the comparison.

2. A clearance detector according to claim 1, *characterised in that* said evaluation means compares the determined signal difference *(D1, D2, D3)* with values stored in a table wherein a corresponding clearance value is stored for each determined signal difference *(D1, D2,* *D3)*, and outputs the corresponding value as an output signal.

3. A clearance detector according to claim 1 or 2, *characterised in that* said evaluation means compares the determined signal difference *(D1, D2, D3)* with a predetermined limit value and generates a warning signal indicating an excessive clearance when this limit value is exceeded.

4. A clearance detector according to one of claims 1 to 3, *characterised in that* said evaluation means continuously detects the value of output signal *(A)* of said angle of rotation sensor *(54)*.

5. A clearance detector according to one of claims 1 to 3, *characterised in that* said evaluation means detects the value of output signal *(A)* of said angle of rotation sensor *(54)* at the beginning of every braking operation and subsequent thereto.

6. A clearance detector according to one of claims 1 to 3, *characterised in that* said evaluation means samples output signal *(A)* of said angle of rotation sensor *(54)* in a cyclic sequence, with the time interval between the sampling operations being selected to be smaller than the minimum duration of a brake application operation.

7. A clearance detector according to one of claims 1 to 6, *characterised in that* said evaluation means comprises a calculation means, preferably a microprocessor.

8. A clearance detector according to one of claims 1 to 7, *characterised in that* the end of said adjusting means *(74)* facing away from said brake disk is coupled to a reducing gear *(53)* which reduces the revolutions executed altogether by said adjusting means *(74)* during the entire readjusting cycle to one revolution at the most, and the output from which actuates said angle of rotation sensor *(54)*.

9. A clearance detector according to claim 8, *characterised in that* said angle of rotation sensor comprises a rotary potentiometer *(54)*, with the reducing factor of said reducing gear *(53)* being selected such that the revolutions altogether executed by said adjusting means *(74)* during the entire readjusting cycle are reduced to a rotation angle substantially corresponding to the complete actuation angle of said rotary potentiometer *(54).*

10. A clearance detector according to claim 9, *characterised in that* the output from said reducing gear *(53)* is coupled to a sliding contact *(542)* of said rotary potentiometer *(54).*

11. A method for detecting the clearance of a disk brake according to the preamble of claim 1, *characterised in that* the value of an output signal *(A)* indicating the brake lining wear is detected, the signal difference *(D1, D2, D3)* with the value of the preceding signal is determined at every change of output signal *(A)*, the determined signal difference *(D1, D2, D3)* is compared with empirically determined signal difference values of said output signal *(A)* of said angle of rotation sensor *(54)*, and the current clearance is determined from the result of the comparison.

12. A method according to claim 11, *characterised in that* the determined signal difference *(D1, D2, D3)* is compared with values stored in a table wherein a corresponding clearance value is stored for each determined signal difference *(D1, D2, D3),* and that the corresponding value is output as an output signal.

13. A method according to claim 11 or 12, *characterised in that* the determined signal difference *(D1, D2, D3)* is compared with a predetermined limit value, and a warning signal indicating an excessive clearance is generated when this limit value is exceeded.

14. A method according to one of claims 11 to 13, *characterised in that* the value of output signal *(A)* is detected continuously.

15. A method according to one of claims 11 to 13, *characterised in that* the value of output signal *(A)* is detected at the beginning of every braking operation and subsequent thereto.

16. A method according to one of claims 11 to 13, *characterised in that* the output signal *(A)* is sampled in a cyclic sequence, with the time interval between the sampling operations being selected to be smaller than the minimum duration of a brake application operation.

## Revendications

1. Détecteur de jeu pour un frein à disque à air comprimé qui présente un étrier de frein (2) cernant un disque de frein, sur l'un côté duquel un dispositif de serrage (3) est prévu qui moyennant une vis de réglage (72, 73) et une pièce de pression (70, 71) logée à l'extrémité de la vis côté disque de frein agit sur une mâchoire de frein (10) logée de manière à pouvoir être déplacée par rapport au disque de frein (1) dans l'étrier de frein côté serrage, un dispositif de rattrapage (74) raccordé de manière à ne pas pouvoir pivoter à la vis de réglage (72, 73) maintenant essentiellement constant le jeu se modifiant à la suite de l'usure de la garniture et étant raccordé à un capteur d'angle de rotation (54) dont le signal de sortie correspond à l'usure de la garniture de l'instant,
caractérisé par un dispositif de dépouillement qui calcule la valeur du signal de sortie (A) du capteur d'angle de rotation (54) et qui calcule à chaque modification du signal de sortie (A) la différence de signal (D1, D2, D3) par rapport à la valeur du signal précédente, compare la différence de signal (D1, D2, D3) calculée avec les valeurs de différence de signaux du signal de sortie (A) du capteur d'angle de rotation (54) calculées empiriquement et détermine à partir du résultat de la comparaison le jeu de l'instant.

2. Détecteur de jeu selon la revendication 1, caractérisé en ce que le dispositif de dépouillement compare la différence de signal (D1, D2, D3) calculée avec des valeurs mémorisées dans un tableau dans lequel est mémorisée pour chaque différence de signal (D1, D2, D3) calculée une valeur correspondante du jeu, et émet la valeur correspondante comme signal de sortie.

3. Détecteur de jeu selon les revendications 1 ou 2, caractérisé en ce que le dispositif de dépouillement compare la différence de signal (D1, D2, D3) calculée avec une valeur limite prédéterminée et lorsque cette valeur limite est dépassée, il produit un signal d'avertissement qui indique un jeu trop important.

4. Détecteur de jeu selon l'une quelconque des revendications 1 à 3, caractérisé en ce que le dispositif de dépouillement relève de manière continue la valeur du signal de sortie (A) du capteur d'angle de rotation (54).

5. Détecteur de jeu selon l'une quelconque des revendications 1 à 3, caractérisé en ce que le dispositif de dépouillement relève la valeur du signal de sortie (A) du capteur d'angle de rotation (54) au début de chaque actionnement du frein et à la suite de chaque actionnement.

6. Détecteur de jeu selon l'une quelconque des revendications 1 à 3, caractérisé en ce que le dispositif de dépouillement capte le signal de sortie (A) du capteur d'angle de rotation (54) en séquence cyclique, l'écart entre les captages étant choisi pour être inférieur à la durée minimale d'une opération de serrage.

7. Détecteur de jeu selon l'une quelconque des revendications 1 à 6, caractérisé en ce que le dispositif de dépouillement présente un dispositif de calcul, de préférence un microprocesseur.

8. Détecteur de jeu selon l'une quelconque des revendications 1 à 7, caractérisé en ce que l'extrémité détournée du disque de frein du dispositif de rattrapage (74) est accouplée à un engrenage réducteur (53) qui ramène à un tour au maximum les tours exécutés au total dans l'ensemble du cycle de rattrapage et dont l'extrémité de sortie actionne le capteur d'angle de rotation (54).

9. Détecteur de jeu selon la revendication 8, caractérisé en ce que le capteur d'angle de rotation présente un potentiomètre rotatif (54), le facteur réducteur de l'engrenage réducteur (53) étant choisi de manière à ce que les tours exécutés au total pendant l'ensemble du cycle de rattrapage du dispositif de rattrapage (74) sont réduits à un angle de rotation qui correspond essentiellement à l'angle d'actionnement complet du potentiomètre rotatif (54).

10. Détecteur de jeu selon la revendication 9, caractérisé en ce que la sortie de l'engrenage réducteur (53) est raccordée à un curseur (542) du potentiomètre rotatif (54).

11. Procédé pour relever le jeu d'un frein à disque conformément au préambule de la revendication 1, caractérisé en ce que la valeur d'un signal de sortie (A) indicatif d'une usure de garniture de frein est saisie, qu'à chaque modification du signal de sortie (A), la différence de signal (D1, D2, D3) est calculée par rapport à la valeur du signal précédent, que la différence de signal calculée (D1, D2, D3) est comparée aux valeurs de différence de signal du signal de sortie (A) du capteur d'angle de rotation (54) calculée empiriquement et que le jeu de l'instant est déterminé à partir du résultat de la comparaison.

12. Procédé selon la revendication 11, caractérisé en ce que la différence de signal (D1, D2, D3) calculée est comparée à des valeurs mémorisées dans un tableau dans lequel une valeur correspondante du jeu est mémorisée pour chaque différence de signal calculée (D1, D2, D3), et que la valeur correspondante est émise en tant que signal de sortie.

13. Procédé selon les revendications 11 ou 12, caractérisé en ce que la différence de signal (D1, D2, D3) calculée est comparée avec une valeur limite prédéterminée et lorsque cette valeur est dépassée, un signal d'avertissement est produit qui indique un trop grand jeu.

14. Procédé selon l'une quelconque des revendications 11 à 13, caractérisé en ce que la valeur du signal de sortie (A) est relevée de manière continue.

15. Procédé selon l'une quelconque des revendications 11 à 13, caractérisé en ce que la valeur du signal de sortie (A) est relevée au début de chaque actionnement de frein et à la suite de celui-ci.

16. Procédé selon l'une quelconque des revendications 11 à 13, caractérisé en ce que le signal de sortie (A) est capté en séquence cyclique, l'écart entre les captages étant choisi pour être inférieur à la durée minimale d'une opération de serrage.
